# EUROPEAN PATENT APPLICATION

(11) **EP 1 980 579 A2**
(43) Date of publication of application: **15.10.2008**
(21) Application number: 08007076.6
(22) Date of filing: 10.04.2008
(51) Int. Cl.: C08G 18/44, C08G 18/67, C09D 175/16, C09D 5/03, C08G 18/32, C08G 18/75, C08G 18/79

(54) **Urethane acrylates for uv powder coatings**

(30) Priority: 12.04.2007 US 923143 P
(71) Applicant: Bayer MaterialScience LLC, Pittsburgh, PA 15205 (US)
(72) Inventor: Ratliff, Katherine M., Ambridge PA 15003 (US); Faecke, Thomas, Dr., 51375 Leverkusen (DE)
(74) Representative: Marx, Thiemo Patrick

(57) **Abstract**

The present invention relates to powder coating binders containing polyurethanes having (meth)acryloyl groups which are applied onto a substrate, fused with heat and cured by electromagnetic radiation and exhibit improved scratch and mar resistance, and to a process for preparing the same.

## Description

### BACKGROUND OF THE INVENTION

The growth of thermoset powder coatings has been driven, primarily, by the need to reduce volatile organic compounds ("VOCs") normally present in liquid coatings. Powder coatings generally contain no solvents and release negligible amounts of VOCs into the atmosphere. Another advantage, both environmentally and economically, is the ability to recycle the overspray of powder coatings. The result is markedly less waste material than is found in traditional liquid finishing processes and increased coating efficiency.

Despite these advantages, powder coatings have found limited uses due to the temperatures required for flow and cure. The development of powder coatings for heat sensitive substrates, such as wood and plastic, alone or in conjunction with traditional subsrates such as metal, has spawned various new technologies, including UV-curable powders.

Such LIV-curable powders have found market opportunities in many different applications. For example, UV-curable powders are particularly suitable for the coating of medium density fibreboard (MDF) and other applications where the speed of cure is critical. They may also be utilized in the production of automotive clearcoats. While the majority of UV powder coating clearcoats have strong chemical resistance, they are generally too brittle to provide substantial scratch and mar resistance.

The use of oligo- and polyurethanes as pulverulent binders makes it possible to obtain high quality coatings. While EP-A 410 242 describes the production of such binders in organic solvents, DE-A 19 939 843 describes solvent-free production of pulverulent binders using an elevated fraction by weight of 10 to 95% of a crystalline component which is synthesized from a mono- or diisocyanate and a monohydroxyalkyl (meth)acrylate, wherein the synthesis without solvent is possible only due to the viscosity-reducing action of the molten, crystalline component. DE-A 2 436 186 describes a urethane acrylate which is not stable in storage but is grindable at room temperature.

The disadvantage of the oligo- and polyurethanes described in EP-A 410 242 and DE-A 19 939 843 is poor grindability. The products described in these publications can only be ground without agglomerating at temperatures below 0°C and all subsequent powder handling must proceed at below room temperature as caking of the powder particles is otherwise observed. It is moreover desirable to reduce the proportion of the components synthesized from a mono- or diisocyanate and a monohydroxyalkyl (meth)acrylate as the toxicological profile of low molecular weight acrylates is disadvantageous in a powder application.

In the case of amorphous materials, glassy properties are determined by investigating the material above and below its glass transition temperature. Below its glass transition temperature, grindable products are obtained. However, if an excessively high glass transition temperature is selected, the products only melt at very high temperatures. The desired glass transition temperature of a powder coating is considerably influenced by the ambient temperatures arising during powder coating.

In summer and, in particular, in the vicinity of the ovens required to fuse the powder coatings, temperatures higher than conventional room temperatures of 20 to 25°C must be anticipated. In practice, a sufficiently high glass transition temperature is thus required for a powder coating. These two criteria inversely determine one another, i.e., a desired elevated glass transition temperature results in undesirably high viscosities and *vice versa.*

In order to achieve the lowest possible fusion temperature, an amorphous powder coating material must accordingly have the lowest possible viscosity and simultaneously exhibit the lowest possible glass transition temperature.

DE-A 2 436 186 describes the production of a radiation-curable urethane acrylate. This compound comprises the reaction product of 1 mole of trimethylolpropane, 3 moles of toluene diisocyanate and 3 moles of hydroxyethyl methacrylate and has a glass transition temperature of 43.7°C and a melt viscosity of 220 Pa·s at 100°C.

U.S. 6,809,126 describes storage-stable powder coatings which are readily grindable at room temperature and which may also be produced without solvents in a melt are obtained if suitable polyols and polyisocyanates are selected and a suitable molecular weight. While the coatings provide excellent storage properties and good chemical resistance, many applications require other advantageous properties. For example, improved scratch and mar resistance is one of the key properties for maintaining the value of various coated substrates.

Therefore, it is an object of the present invention to provide UV-curable powder coatings that demonstrate increased scratch and mar resistance without sacrificing storage stability and easy processability.

### SUMMARY OF THE INVENTION

The present invention relates to a process for preparing a binder for a powder coating composition from polyurethanes containing (meth)acryloyl groups without using organic solvents which is curable with high energy radiation and which, without the additives conventional in a UV-curable coating formulation, comprising reacting:
A) one or more di- or polyisocyanates or mixtures thereof, optionally with the addition of one or more monoisocyanates;
B) one or more di- or polyfunctional isocyanate-reactive compounds or mixtures thereof;
C) one or more monofunctional isocyanate-reactive compounds; and
D) an aliphatic polycarbonate polyester having between 2 and 12 methylene groups in the repeating unit;
wherein 1) the ratio of NCO groups in A) to the sum of the equivalents of isocyanate-reactive groups in B), C) and D) is between 0.8 and 1.2 and (meth)acryloyl-functional compounds are used in either in B) or C) or in both B) and C), such that 2) the ratio of the equivalents of isocyanate-reactive groups on monofunctional compounds C) to the equivalents of isocyanate-reactive groups on the di or polyfunctional compounds B) is less than 1.2, 3) the di or polyfunctional isocyanate-reactive compounds B) have an average functionality of less than 2.5, and 4) component D) is present in an amount of from 5 to 30 wt. %.

### DETAILED DESCRIPTION OF THE PREFERRED EMBODIMENTS

According to the invention, the term equivalent (eq) relates, as is usual in chemical notation, to the relative number of reactive groups present in the reaction. According to the invention, these are isocyanate-reactive groups such as alcohols or amines. Thus, in the case of alcohols, when 1 mole of monoalcohol = 1 equivalent and 1 mole of diol (*i.e.* 2 moles of OH groups) = 2 equivalents are used, a ratio according to the invention of 1 eq : 2 eq = 0.5 is obtained.

The phrase an "average functionality of polyfunctional isocyanate-reactive compounds" as used herein describes the arithmetic mean of the quantities of the polyfunctional isocyanate-reactive compounds weighted by the functionality thereof, i.e., the average number of functional groups per molecule in a mixture. If, for example, 1 mole of trimethylolpropane (functionality 3) and 2 moles of ethylene glycol (functionality 2) are used, an average functionality of 1 mole / (1 mole + 2 moles) 3 + 2 mole / (1 mole + 2 moles) 2 = 2.33 is obtained.

The isocyanates A) may be aliphatic or aromatic. Examples include cyclohexyl isocyanate, butyl isocyanate, phenyl isocyanate, tolyl isocyanate, 1,4-tetramethylene diisocyanate, 1,6-hexamethylene diisocyanate (HDI), 1,8-octamethylene diisocyanate, 1,11-undecamethylene diisocyanate, 1,12-dodecamethylene diisocyanate, 2,2,4- and 2,4,4-trimethyl-1,6-hexamethylene diisocyanate (TMDI), 1,3- and 1,4-cyclohexane diisocyanate, 1-isocyanato-3-isocyanatomethyl-3,5,5-trimethylcyclohexane (IPDI), 1-isocyanato-1-methyl-4(3)-isocyanato-methylcyclohexane (IMCI), 1,4-phenylene diisocyanate, 1,5-naphthylene diisocyanate, 1-isocyanato-2-isocyanatomethylcyclopentane, (4,4'- and/or 2,4'-)diisocyanatodicyclohexylmethane (H12-MDI), bis(4-isocyanato-3-methylcyclohexyl)methane, xylylene diisocyanate (XDI), α,α,α',α'-tetramethyl-1,3- and/or -1,4-xylylene diisocyanate (TMXDI), 1,3- and/or 1,4-hexahydroxylylene diisocyanate (H6-XDI), 2,4- and/or 2,6-hexahydrotolylene diisocyanate (H6-TDI), 2,4- and/or 2,6-toluene diisocyanate (TDI), 4,4'- and/or 2,4'-diphenylmethane diisocyanate (MDI) and the derivatives thereof with urethane, isocyanurate, allophanate, biuret, uretidione, iminooxadiazinedione structural units, providing that they have at least one free NCO group and mixtures thereof. HDI, IPDI, TDI, H12-MDI, H6-XDI and mixtures thereof are preferred. HDI, TDI, IPDI and H12-MDI are more preferred. Most preferably, the coating formulation contains 15 to 30 wt. % of HDI, HDI oligomers or mixtures thereof.

Component B) includes polyols such as ethylene glycol, 1,2- and 1,3-propanediol, isomeric butanediols, neopentyl glycol, 1,6-hexanediol, 2-methyl-1,3-propanediol, 2,2,4-trimethyl-1,3-pentanediol, 2-n-butyl-2-ethyl-1,3-propanediol, glycerol monoalkanoates (such as for example glycerol monostearates), dimer fatty alcohols, diethylene glycol, triethylene glycol, tetraethylene glycol, 1,4-dimethylolcyclohexane, dodecanediol, alkoxylated bisphenol A, hydrogenated bisphenol A, 1,3-hexanediol, 1,3-octanediol, 1,3-decandiol, 3-methyl-1,5-pentanediol, 3,3-dimethyl-1,2-butanediol, 2-methyl-1,3-pentanediol, 2-methyl-2,4-pentanediol, 3-hydroxymethyl-4-heptanol, 2-hydroxymethyl-2,3-dimethyl-1-pentanol, glycerol, trimethylolethane, trimethylolpropane, trimer fatty alcohols, isomeric hexanetriols, sorbitol, pentaerythritol, ditrimethylolpropane, dipentaerythritol, diglycerol and 4,8-bis(hydroxymethyl)-tricyclo[5.2.0^{2.6}]-decane (TCD alcohol).

According to the invention, it is also possible to use OH-functional esters with a weight average molecular weight < 2000, preferably < 500, which are obtained by reacting the above-stated polyols with s-caprolactone. Unsaturated esters may also be used, which, apart from the stated alcohols, contain unsaturated acids or alcohols, such as maleic acid/anhydride, fumaric acid, itaconic acid, citraconic acid/anhydride, aconitic acid, tetrahydrophthalic acid/anhydride, 3,6-endomethylene-1,2,3,6-tetrahydrophthalic acid/anhydride and butenediols.

Alcohols and amines comprising (meth)acryloyl groups may also be considered, as may reaction products substantially containing such alcohols and amines which are obtained by the condensation of n-functional alcohols or amines or aminoalcohols with (meth)acrylic acid, wherein mixtures may also be used as the alcohols, amines or aminoalcohols. These compounds or product mixtures include, for example, the reaction products of glycerol, trimethylolpropane and/or pentaerythritol, of low molecular weight alkoxylation products of such alcohols, such as ethoxylated or propoxylated trimethylolpropane with (meth)acrylic acid.

According to the invention, isocyanate-reactive groups which are additionally incorporated into the urethane acrylates such as dimethylolpropionic acid (DMPA), N-methyldiethanolamine, N-ethyl-diethanolamine, N-(tert.)-butyldiethanolamine, N-isopropyldiethanolamine, N-n-propyldiethanolamine, N-hexyldiethanolamine, N-phenyldiethanolamine, N-benzyldiethanolamine, N-tolyldiethanolamine, N-lauryldiethanolamine, N-stearyldiethanolamine, triethanolamine, tris(2-aminoethyl)amine, N,N-bis(2-hydroxyethyl)ethylenediamine, 2-(2-dimethylaminoethylamino)ethanol, 2-(2-diethylaminoethylamino)ethanol, bis-2-(methylaminoethyl)methylamine and 1,4,7-triethyldiethylenetriamineare can also used. Mixtures of different urethane acrylates, which contain on the one hand DMPA and on the other an above-described tertiary amine, are optionally also produced.

The following amines may also be used instead of or in combination with a polyol in order to produce urea acrylates: ethanolamine, N-methyl-ethanolamine, N-ethylethanolamine, 2-amino-1-propanol, tetramethyl-xylylenediamine, ethylenediamine, 1,6-hexamethylenediamine, isophoronediamine (IPDA), (4,4'- and/or 2,4'-)diaminodicyclohexyl-methane, and (4,4'- and/or 2,4'-)diamino-3,3'-dimethyldicyclohexylmethane.

All the stated di- or polyfunctional isocyanate-reactive substances may also be used in mixtures.

Preferred substances are ethylene glycol, 1,2- and 1,3-propanediol, isomeric butanediols, neopentyl glycol, 1,6-hexanediol, 2-ethyl-1,3-hexanediol, perhydrobisphenol and 4,8-bis(hydroxymethyl)ricyclo[5.2.0(2.6)]-decane (TCD alcohol). Ethylene glycol, 1,2-propanediol, 1,4-butane-diol and neopentyl glycol are more preferred.

Compounds suitable as component C) are aliphatic and aromatic alcohols such as methanol, ethanol, N-propanol, isopropanol, butanol, hexanol, fatty alcohols and phenols, as well as in particular hydroxyalkyl (meth)acrylates with 2 to 12 carbon atoms in the alkyl chain, preferably 2 to 4 carbon atoms in the hydroxyalkyl residue, such as hydroxyethyl (meth)acrylate, 2- and 3- hydroxypropyl (meth)acrylate and 2-, 3- and 4-hydroxybutyl (meth)acrylate, together with OH-functional vinyl ethers, such as hydroxybutyl vinyl ether and mixtures thereof. (Meth)acrylic acid esters/amides of n-functional alcohols or amines or aminoalcohols which contain an average of 0.3-1.5 OH-groups and mixtures thereof are also according to the invention. These compounds or product mixtures include, for example, the esters of glycerol, trimethylolpropane and/or pentaerythritol. Defined monools may also be obtained from the reaction of epoxyfunctional (meth)acrylic acid esters with (meth)acrylic acid. The reaction of glycidyl methacrylate with acrylic acid accordingly yields a mixture acrylic acid/methacrylic acid esters of glycerol, which may also advantageously be used. Further, the reaction products of s-caprolactone with hydoxyakyl (meth)acrylates yielding monoalcohol-functional polycaprolactone with (meth)acryloyl groups can be used as well. Hydroxyethyl acrylate and the isomeric hydroxypropyl acrylates are preferred.

The reaction of hydroxy-functional acrylates with isocyanates is known and described in, for example, P.K.T. Oldring (ed.), Chemistry & Technology of UV & EB Formulations For Coatings, Inks & Paints, Vol. 2, 1991, SITA Technology, London, pp. 73-97.

Preferably, components B) and C) are used in amounts such that their total weight is between 25 and 55 wt. % of the resin formulation.

Polycarbonate polyesters suitable as component D) include those known per se such as the products obtained from the reaction of diols such as propanediol-(1,3), butanediol-(1,4) and/or hexanediol-(1,6), dodecanediol-(1,12) diethylene glycol, triethylene glycol or tetraethylene glycol with carbonate esters (e.g. dimethylcarbonate or diphenylcarbonate) or phosgene. The suitable polycarbonate polyesters have between 2 and 12 methylene groups in the repeating unit, preferably between 4 and 6 groups. Component D) is used in an amount of between 5 and 30 wt.%, more preferably between 9 and 20 wt.%.

The process according to the invention may be performed by 1) initially introducing the isocyanate-containing constituents A) and reacting them with B), C) and D), with perfusion with an oxygen-containing gas, preferably air, at a temperature above the melting point or softening temperature of the product to be produced in the temperature range from 30 to 150°C, preferably, from 70 to 130°C, more preferably, from 80 to 120°C, until, in the case of NCO:OH feed ratios of 1, the NCO value has fallen to the desired value, preferably below 1.0 wt.%, more preferably, below 0.8 wt.%. It may here 2) be convenient to apportion B), C) and D) separately in succession, separately simultaneously or as a mixture. Apportionment as a mixture is preferred.

It is also possible 3) to initially to introduce B), C) and D) and to apportion A). Another method 4) which may be advantageous is first to introduce B), then to apportion C) and D) and finally to add A). The sequence of A) and B) in 4) may be swapped in 5). Finally, 6) the separation of the components in A) can be advantageous. The polyfunctional component can be charged first and reacted with all or parts of C), then reacted with parts of B) and D). Then, the rest of A) is charged with the remainder of C) and the remainder of B) and D). Variant 1) is preferred.

The addition reaction giving rise to the urethane (optionally urea) may be accelerated in known manner by means of suitable catalysts, such as tin octoate, dibutyltin dilaurate or tertiary amines such as dimethyl-benzylamine. The urethane acrylate obtained as the reaction product is conventionally protected from premature and unwanted polymerization by the addition of suitable inhibitors or antioxidants, such as phenols and/or hydroquinones and/or stable N-oxyl radicals and/or phenothiazine or other free radical scavengers in quantities in each case of 0.0005 to 0.3 wt.%, relative to the resin melt. This auxiliary agent may be added before, simultaneously with and/or after the reaction which gives rise to the polyurethane (urea).

In addition to batchwise operation, it is furthermore possible to perform the reactions in a tubular reactor, static mixer or reaction extruder or reaction kneader. (Generally, all types of continuous reactors may be used.) The shorter reaction times in this case are advantageous, wherein higher temperatures (for example, 80 - 200°C) may also be used. It can be useful to react portions of A) with B) and/or C) and/or D) up front as a prepolymer, before reacting the remaining components in the continuous reactor.

The powder coatings according to the invention have glass transition temperatures within the range of from 30 to 80°C, preferably, from 30 to 70°C, more preferably, from 30 to 60°C. Melt viscosities should ideally be minimized. This is, however, particularly dependent upon the nature of the structural components and, in this case, additionally upon the molecular weight established, which is considerably determined by the ratio of equivalents of isocyanate-reactive groups on monofunctional compounds to the equivalents of isocyanate-reactive groups on polyfunctional reactive compounds. Here, this ratio is less than 1.2, preferably less than 1.1, more preferably, less than or equal to 1.

The average functionality of the polyfunctional isocyanate-reactive compounds is less than 2.5. Thus, when the glass transition temperature is adjusted to above 30°C, viscosity may be kept to a low value by varying the monool to polyol ratio.

The polyurethane containing (meth)acrylate groups obtained by the process according to the invention are valuable binders for powder coatings. They may be processed without further additions as thermally crosslinkable powder clear coatings or, preferably, they may be provided with the additives conventional in coatings technology, such as pigments (for example, titanium dioxide) levelling agents (for example polybutyl acrylate or silicones), deaerating agents (for example benzoin), tribological additives (for example aliphatic amines) and/or other additives and homogenized, for example on extruders or kneaders at temperatures within the range from 40 to 140°C, preferably from 70 to 120°C. It is also possible to add the stated auxiliary substances and additives to the reaction mixture or resin melt immediately after the end of, during or at the beginning of production.

The solid obtained is then ground in a manner known *per se* and coarse grain fractions, preferably at least those of a grain size of above 0.1 mm, are removed by screening.

The pulverulent coating compositions produced according to the invention may be applied onto substrates to be coated using conventional powder application processes, such as electrostatic powder spraying, triboelectric application or fluidised bed coating. The coatings are then initially fused by the action of heat (for example from IR light sources), resulting in the formation of a clear film, provided that no pigments or the like have been incorporated. The necessary temperature is above 50°C, preferably, above 70°C, more preferably, above 90°C. The coatings may be cured either by heating to 130 to 220°C, preferably, to 150 to 190°C, and/or by the action of high energy radiation, such as UV or electron beam radiation. As is known to a person skilled in the art, electron beam radiation is produced by thermal emission and acceleration over a potential difference. The high energy electrons then break through a titanium foil and are guided onto the binders to be cured. The general principles of electron beam curing are described in, for example, Chemistry & Technology of UV & EB formulations for coatings, inks & paints, vol. 1, P.K.T. Oldring (ed.), SITA Technology, London, England, pp. 101-157, 1991. No photoinitiator is required for electron beam curing.

In the case of crosslinking by UV radiation, photoinitiators are homogeneously incorporated into the coating compositions. Suitable photoinitiators are the conventionally used compounds provided that they have no negative impact upon powder properties such as flowability and storage stability. Examples of such compounds are 1-hydroxycyclohexyl phenyl ketone, benzil dimethyl ketal or, in the case of pigmented systems, 2-methyl-1-(4-(methylthio)phenyl-2-morpholino-1-propanone or trimethyl benzoyl diphenyl phosphine oxide.

The photoinitiators, which are used in quantities from between 0.1 and 10 wt.%, preferably, from 0.1 to 5 wt.%, relative to the weight of the coating binder, may be used as an individual substance or, due to frequent advantageous synergistic effects, also in combination with another system. Thermal curing may also proceed with the addition of thermally dissociating free radical formers. As is known to a person skilled in the art, the following are suitable: peroxy compounds (such as diacyl peroxides), benzoyl peroxide, alkyl hydroperoxides (such as diisopropylbenzene), monohydroperoxide, alkyl peresters (such as tert.-butyl perbenzoate), dialkyl peroxides (such as di-tert.-butyl peroxide), peroxydicarbonates (such as dicetyl peroxydicarbonate), inorganic peroxides (such as ammonium peroxydisulfate and potassium peroxydisulfate) and azo compounds (such as 2,2'-azobis[N-(2-propenyl)-2-methylpropionamide], 1-[(cyano-1-methylethyl)-azo]formamide, 2,2'-azobis(N-butyl-2-methyl-propionamide), 2,2'-azobis(N-cyclohexyl-2-methylpropionamide), 2,2'-azobis{2-methyl-N-[2-(1-hydroxybutyl)]propionamide and 2,2'-azobis{2-methyl-N-[1,1-bis(hydroxymethyl)-2-hydroxyethyl]propionamide).

Particularly suitable initiators are those in solid form with a melting point below 130°C and a half-life of the order of minutes at a decomposition temperature above 100°C. It is also advantageous when carrying out thermal curing by means of an initiator to minimize the concentration of stabilizers.

It is possible to combine crosslinking by UV radiation (using a photoinitiator) with thermal crosslinking (using a thermally dissociating free radical former). This is described in European patent application EP 844286 A1 for the case of a mixture of an unsaturated resin (unsaturated polyester or unsaturated polyacrylate or unsaturated polymethacrylate or mixtures thereof) with a second copolymerizing resin with vinyl ether, acrylate, methacrylate or allyl ester groups.

The urethane acrylates according to the invention may also be cured in two steps purely thermally or also in combination with UV irradiation. This is particularly advantageous if areas are being coated which, due to the geometry of the substrate, cannot be uniformly irradiated.

The binders according to the invention for powder coatings are suitable for coating substrates of wood, metal, plastics, mineral substances and/or precoated substrates made therefrom, or substrates made therefrom which contain of any desired combinations of the stated materials. Applications which may in particular be mentioned are in industrial coating of fibreboards (e.g., medium-density fibreboard sheets), preassembled high-grade products which already contain temperature-sensitive sub-assemblies, for example electronic sub-assemblies, together with coating of furniture, coils, everyday articles, automotive bodies and parts attached thereto.

The urethane acrylates according to the invention may also be used in combination with one another or together with other binders conventional in powder coating chemistry such as with polyesters, polyacrylates, polyethers, polyamides and polycarbonates, which may also optionally contain unsaturated groups. Suitable unsaturated groups are acrylate, methacrylate, fumarate, maleate, vinyl and/or vinyl ether groups. Acrylate and methacrylate groups are preferred. The quantity ratios are determined such that the double bond density of the resultant mixture does not fall below 1.0 mole of double bonds per kilogram, as adequate curing is otherwise no longer possible.

The binders according to the invention may also be used as adhesives and sealants. It is a prerequisite in the case of UV radiation curing that at least one of the two substrates to be adhesively bonded or sealed relative to one another must allow UV radiation to pass through, i.e. must as a rule be transparent. In the case of irradiation with electrons, adequate transparency for electrons must be ensured. Suitable substrates are composed of wood, metal, plastics, mineral substances and/or precoated substrates or a mixture of said substrates.

The binders according to the invention are also suitable as curing compositions in casting, injection moulding and pressure casting processes. In this case, an article to be coated is introduced into a mold, wherein a gap of at most 1 cm, preferably of less than 0.3 cm, still remains between the surface of the article and the mould. The binder according to the invention is then introduced into the mold under pressure via an extruder and then cured thermally and/or with radiation.

Due to the high-grade properties of the binders according to the invention, the binders of the present invention are also suitable for the particularly high demands of OEM coating, in particular, for automotive and automotive part coating.

### EXAMPLES

Components used in the Examples:
Desmophen^{®} C2200: linear hydroxyl-functional aliphatic polycarbonate diol, hydroxyl #: 56 (Bayer MateriaIScience AG, Leverkusen, DE).
Desmodur^{®} N3300: aliphatic polyisocyanate (HDI trimer), NCO content: 21.8% (Bayer MaterialScience AG, Leverkusen, DE).
Desmodur^{®} W: monomeric cycloaliphatic diisocyanate (cyclohexylmethane diisocyanate), NCO content: 31.8% (Bayer MateriaIScience AG, Leverkusen, DE).
BHT: 2,6-Di-tert-butyl -4-methylphenol.
DBTL: dibutyl tin dilaurate

Examples according to the invention.

### Examples 1-10:

A 200 ml aluminium reaction can set into a heat block, equipped with a thermocouple, a stirrer and air inlet, was charged with Desmodur^{®} N3300, T12, and BHT. The mixture was heated to 70°C. Desmophen^{®} C2200 and the first charge of hydroxypropylacrylate were added dropwise over 60 minutes. The temperature was controlled so as not to exceed 85°C by speed of addition. The mixture was stirred for 60 minutes, then sampled for NCO%. If the calculated theoretical NCO content is reached, Desmodur^{®} W was added. Then the second charge of ydroxypropylacrylate was added slowly, and the mixture was stirred for 120 minutes. The temperature was increased to 110°C and BHT was added and let to dissolve for 10 minutes. Butanediol was added dropwise over 30 minutes, with the temperature controlled to remain between 100-120°C. The mixture was stirred an additional 90 minutes until the NCO content was well below 1%.

| 1%.**Component** | **Ex.** | **1 Ex. 2** | **Ex. 3** | **Ex. 4** | **Ex. 5** | **Ex. 6** | **Ex. 7** | **Ex. 8** | **Ex. 9** | **Ex. 10** |
|---|---|---|---|---|---|---|---|---|---|---|
| Desmophen C2200 | 9.09 | 9.09 | 9.09 | 10.77 | 12.29 | 16.85 | 19.69 | 19.69 | 22.2 | 25.43 |
| Desmodur N3300 | 17.73 | 17.73 | 17.73 | 21.01 | 23.96 | 16.43 | 19.2 | 19.2 | 21.64 | 24.79 |
| DBTL | 0.1 | 0.1 | 0.1 | 0.1 | 0.1 | 0.1 | 0.1 | 0.1 | 0.1 | 0.1 |
| BHT (1^{st} Charge) | 0.1 | 0.1 | 0.1 | 0.1 | 0.1 | 0.1 | 0.1 | 0.1 | 0.1 | 0.1 |
| HPA (1^{st} Charge) | 10.64 | 10.64 | 10.64 | 12.6 | 14.38 | 8.76 | 10.24 | 10.24 | 11.54 | 13.22 |
| Desmodur W | 42.88 | 42.88 | 42.88 | 38.1 | 33.8 | 39.73 | 34.83 | 34.83 | 30.53 | 24.98 |
| HPA (2^{nd} Charge) | 7.09 | 7.09 | 7.09 | 6.3 | 5.59 | 6.57 | 5.76 | 5.76 | 5.05 | 4.13 |
| BHT 2^{nd} Charge) | 0.1 | 0.1 | 0.1 | 0.1 | 0.1 | 0.1 | 0.1 | 0.1 | 0.1 | 0.1 |
| Butanediol | 12.27 | 12.27 | 12.27 | 10.91 | 9.68 | 11.37 | 9.97 | 9.97 | 8.74 | 7.15 |
| Tg (°C) | 44 | 31 | 43 | 36 | 36 | 49 | 47 | 46 | 31 | 32 |

Although the invention has been described in detail in the foregoing for the purpose of illustration, it is to be understood that such detail is solely for that purpose and that variations can be made therein by those skilled in the art without departing from the spirit and scope of the invention except as it may be limited by the claims.

## Claims

1. A process for preparing a binder for a powder coating composition from polyurethanes containing (meth)acryloyl groups without using organic solvents which is curable with high energy radiation comprising reacting:
A) one or more di- or polyisocyanates or mixtures thereof, optionally with the addition of one or more monoisocyanates;
B) one or more di- or polyfunctional isocyanate-reactive compounds or mixtures thereof;
C) one or more monofunctional isocyanate-reactive compounds; and
D) an aliphatic polycarbonate polyester having between 2 and 12 methylene groups in the repeating unit;
wherein 1) the ratio of NCO groups in A) to the sum of the equivalents of isocyanate-reactive groups in B), C) and D) is between 0.8 and 1.2 and (meth)acryloyl-functional compounds are used either in B) or C) or in both B) and C), such that 2) the ratio of the equivalents of isocyanate-reactive groups on monofunctional compounds C) to the equivalents of isocyanate-reactive groups on the di or polyfunctional compounds B) is less than 1.2, 3) the di or polyfunctional isocyanate-reactive compounds B) have an average functionality of less than 2.5, and 4) component D) is present in an amount of from 5 to 30 wt. %.

2. The process according to Claim 1, wherein the di- or polyisocyanates are selected such that the powder coating composition contains 15 to 30 wt.% HDI, HDI oligomers or a mixture thereof.

3. The process according to Claim 1, wherein component D) is present in an amount of from 9 to 20% based on the overall coating composition.

4. The process according to Claim 1, wherein components C) and D) are present in an amount of from 25 to 55 wt.% based on the overall coating composition.

5. A coating composition comprising the binder produced by the process of Claim 1.

6. A coating composition comprising the binder of Claim 1 and at least one polyester, polyacrylate, polyether, polyamide, polyurethane or polycarbonate.

7. A curing composition comprising the binder produced by the process of Claim 1.

8. A curing composition comprising the binder of Claim 1 and at least one polyester, polyacrylate, polyether, polyamide, polyurethane or polycarbonate.

9. A substrate coated with a coating composition comprising the binder produced by the process of Claim 1.

10. A substrate coated with a coating composition comprising the binder produced by the process of Claim 1 and at least one polyester, polyacrylate, polyether, polyamide, polyurethane or polycarbonate.
